# EUROPÄISCHE PATENTANMELDUNG

(11) **EP 2 273 653 A1**
(43) Veröffentlichungstag der Anmeldung: **12.01.2011**
(21) Anmeldenummer: 10162234.8
(22) Anmeldetag: 07.05.2010
(51) Int. Cl.: H02K 1/20

(54) **Ständer für eine elektrische Maschine**

(30) Priorität: 02.07.2009 DE 102009031548
(71) Anmelder: Siemens Aktiengesellschaft, 80333 München (DE)
(72) Erfinder: Seibicke, Frank, 14822, Borkheide (DE)

(57) **Zusammenfassung**

Die Erfindung betrifft einen Ständer (3) für eine elektrische Maschine (1), wobei der Ständer (3) in einer axialen Richtung (X) hintereinander angeordnete Bleche (2,2',2") aufweist, wobei die Bleche (2,2',2") elektrisch voneinander isoliert angeordnet sind, wobei zwischen einigen der Bleche (2,2',2") eine senkrecht zur axialen Richtung (X) verlaufende, von einer Flüssigkeit durchfließbare Leitung (5,5',5") angeordnet ist. Die Erfindung schafft einen Ständer (3), bei dem die Leitungen (5,5',5"), die zur Kühlung des Ständers (3) verwendet werden, einen guten wärmeleitfähigen Kontakt zu den Blechen (2,2',2") des Ständers (3) aufweisen.

## Beschreibung

Die Erfindung betrifft einen Ständer für eine elektrische Maschine.

Die Kühlung eines Ständers einer elektrischen Maschine, wie z.B. eines Generators oder eines Elektromotors, wird heutzutage, mittels in den Blechpaketen oder an den Blechpaketen des Ständers angeordneten, in axialer Richtung verlaufenden, mit einer Kühlflüssigkeit durchflossenen Leitungen realisiert. In der Regel wird dabei Wasser als Kühlflüssigkeit verwendet. Bei dieser handelsüblichen Realisierung der Kühlung eines Ständers ergibt sich ein Kontaktproblem zwischen den unebenmäßigen relativ kleinen jeweiligen seitlichen Oberflächen der hintereinander angeordneten Bleche der Blechpakete des Ständers und den Leitungen, welche durch Schrumpfen, Kontaktfolien oder andere Bearbeitungsverfahren vermindert werden muss, um einen ausreichenden Wärmeübergang zwischen den Leitungen und den Blechen zu erzielen.

Der Wärmeübergang zwischen den Leitungen und den Blechen ist dennoch relativ schlecht.

Es ist Aufgabe der Erfindung, einen Ständer zu schaffen, bei dem die Leitungen, die zur Kühlung des Ständers verwendet werden, einen guten wärmeleitfähigen Kontakt zu den Blechen des Ständers aufweisen.

Diese Aufgabe wird gelöst durch einen Ständer für eine elektrische Maschine, wobei der Ständer in einer axialen Richtung hintereinander angeordnete Bleche aufweist, wobei die Bleche elektrisch voneinander isoliert angeordnet sind, wobei zwischen einigen der Bleche, eine senkrecht zur axialen Richtung verlaufende, von einer Flüssigkeit durchfließbare Leitung angeordnet ist.

Vorteilhafte Ausbildungen der Erfindung ergeben sich aus den abhängigen Ansprüchen.

Es erweist sich als vorteilhaft, wenn die Leitung ringförmig um die geometrische in axiale Richtung verlaufende Mittenachse des Ständers angeordnet ist, da eine ringförmige Leitung besonders einfach herzustellen ist.

Ferner erweist es sich als vorteilhaft, wenn die Leitung einen quadratischen oder rechteckförmigen Querschnitt aufweist, da dann ein besonders guter Wärmeübergang zwischen den zur Leitung benachbart angeordneten Blechen realisiert werden kann.

Weiterhin erweist sich eine elektrische Maschine, die den erfindungsgemäßen Ständer aufweist, als vorteilhaft.

Die elektrische Maschine ist dabei üblicherweise als Generator und insbesondere als Windkraftgenerator oder als Elektromotor ausgebildet.

Zwei Ausführungsformen der Erfindung sind in der Zeichnung dargestellt. Dabei zeigen:
- FIG 1: eine Maschine, die einen erfindungsgemäßen Ständer aufweist,
- FIG 2: einen erfindungsgemäßen Ständer der Maschine,
- FIG 3: Leitungen zur Kühlung des Ständers,
- FIG 4: eine Leitung mit einem rechteckförmigen Quer- schnitt, und
- FIG 5: eine Leitung mit einem quadratischen Querschnitt.

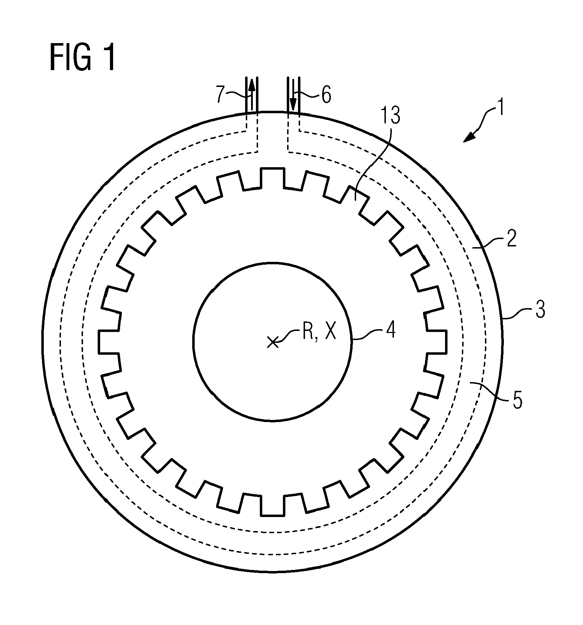

In FIG 1 ist in Form einer schematisierten Darstellung eine elektrische Maschine 1 dargestellt, die im Rahmen des Ausführungsbeispiels als Elektromotor ausgebildet ist. Die Maschine 1 weist einen unbeweglich angeordneten Ständer 3 auf, wobei dieser in einer axialen Richtung X hintereinander angeordnete Bleche aufweist, wobei in der Ansicht gemäß FIG 1 nur die Stirnseite des vordersten Blechs 2 sichtbar ist. Die Bleche sind dabei, z.B. durch eine entsprechende isolierende Lackschicht oder eine Schicht aus einem anderen isolierenden Material, voneinander elektrisch isoliert angeordnet. Die Bleche sind dabei um eine geometrische in axiale Richtung X verlaufende Mittenachse R des Ständers angeordnet. Ein einzelnes Blech kann dabei einstückig aufgebaut sein oder aber aus einzelnen Blechsegmenten bestehen, die derart zusammengesetzt sind, dass sich die in FIG 1 dargestellte ringförmige Form des Blechs 2 ergibt. Die Bleche sind dabei mit Ausnehmungen versehen, wobei der Übersichtlichkeit halber nur eine Ausnehmung 13 mit einem Bezugszeichen versehen ist. In den Ausnehmungen sind die elektrischen Spulen des Ständers 3, die beim Betrieb der Maschine 1 ein magnetisches Feld erzeugen, verlegt. Der Übersichtlichkeit halber und da für das Verständnis der Erfindung unwesentlich sind die Spulen dabei in FIG 1 nicht dargestellt.

Um die Mittenachse R des Ständers 3 ist rotierbar ein Läufer 4 angeordnet, der im Betrieb der Maschine um die Mittenachse R rotiert. Der Läufer 4 weist bei einer Ausbildung der Maschine als sogenannte Synchronmaschine Permanentmagnete auf und ist mit der Motorwelle der Maschine 1, welche sich im Betrieb der Maschine 1 um die Mittenachse R dreht, verbunden, wobei die Motorwelle in FIG 1 der Übersichtlichkeit halber nicht dargestellt ist. Weiterhin ist der Läufer 4, da für das Verständnis der Erfindung unwesentlich, nur symbolisch in Form eines Kreises dargestellt.

Wie schon erwähnt, wird die Kühlung der Bleche des Ständers bei einer solchen Maschine handelsüblich mit in axialer Richtung X verlaufenden, von im allgemeinen von Wasser durchflossenen Leitungen realisiert, wobei die Leitungen in den Blechen verlaufen oder an z.B. den seitlichen Außenseiten der Bleche angeordnet sind. Die einzelnen Bleche sind hierzu entsprechend im Allgemeinen mit Ausnehmungen versehen, die zusammen genommen in axiale Richtung verlaufende Kanäle bilden. In den Kanälen werden die Leitungen zur Kühlung des Ständers angeordnet.

Bei dem erfindungsgemäßen Ständer 3 gemäß FIG 1 ist im Gegensatz hierzu zwischen einigen der Bleche jeweilig eine senkrecht zur axialen Richtung X verlaufende von einer Flüssigkeit durchfließbare Leitung 5 angeordnet. In FIG 1 ist dabei eine solche Leitung 5 gestrichelt dargestellt, da im Rahmen der Ansicht gemäß FIG 1, die Leitung 5 normalerweise nicht sichtbar ist. Die Leitung 5 wird zur Kühlung von einer Flüssigkeit, z.B. in Richtung der Pfeile 6 und 7 durchflossen, wobei die Flüssigkeit üblicherweise aus Wasser besteht, aber auch aus einem anderen flüssigen Medium bestehen kann.

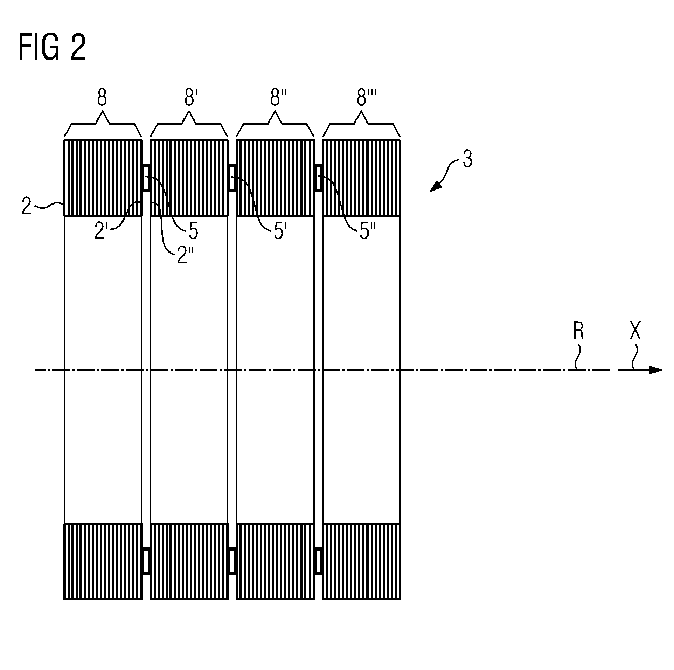

In FIG 2 ist der erfindungsgemäße Ständer 3 in Form einer schematisierten Schnittsansicht von der Seite dargestellt. Gleiche Elemente sind dabei mit den gleichen Bezugszeichen versehen wie in FIG 1. Die einzelnen Bleche sind dabei mit Strichen angedeutet, wobei der Übersichtlichkeit halber nur die Bleche 2, 2' und 2" mit Bezugszeichen versehen sind. Eine bestimmte Anzahl von Blechen sind dabei jeweils zu einem so genannten Blechpaket zusammengefasst, so dass sich im Rahmen des Ausführungsbeispiels, die Blechpakete 8, 8', 8" und 8"' ergeben. Die einzelnen Blechpakete können dabei eine unterschiedliche Anzahl von Blechen aufweisen. Die senkrecht zur axialen Richtung X verlaufenden, von einer Flüssigkeit durchfließbaren Leitungen 5, 5' und 5" sind im Rahmen des Ausführungsbeispiels jeweils zwischen zwei zu den jeweiligen Leitungen benachbarten Blechpaketen angeordnet. Die Leitung 5 ist z.B. zwischen dem Blechpaket 8 und dem Blechpaket 8' angeordnet, wobei die Leitung 5 zwischen dem Blech 2' und dem Blech 2" angeordnet ist. Die jeweilige Leitung weist einen wärmeleitenden Kontakt mit mindestens einem der an die Leitung unmittelbar angrenzenden beiden Bleche auf, wobei im Rahmen des Ausführungsbeispiels die jeweilige Leitung einen wärmeleitenden Kontakt mit beiden der an sie unmittelbar angrenzenden Bleche 2' und 2" aufweist, was eine besonders gute Wärmeableitung ermöglicht. Der wärmeleitende Kontakt kann dabei z.B. in Form eines direkten mechanischen Kontakts zwischen der jeweiligen Leitung und dem oder den Blechen realisiert sein, oder aber es ist zur Realisierung des wärmeleitenden Kontakts, insbesondere eines besonders gut wärmeleitenden Kontakts, zwischen der Leitung und dem oder den Blechen noch eine wärmeleitende Schicht, z.B. in Form einer wärmeleitenden Folie, angeordnet. Der wärmeleitende Kontakt zwischen der Leitung und dem unmittelbar an die Leitung angrenzenden Blech oder den unmittelbar an die Leitung angrenzenden Blechen ist dann über die wärmeleitende Schicht realisiert.

Die Leitungen weisen bei der Erfindung einen wärmeleitenden Kontakt mit den stirnseitigen Oberflächen der Bleche auf. Gegenüber dem Stand der Technik, bei dem die Leitungen nur mit den sehr schmalen seitlichen Oberflächen der Bleche mit den Blechen in Kontakt kommen, wird bei der Erfindung ein sehr gut wärmeleitender Kontakt zwischen den Leitungen und den Blechen erzielt.

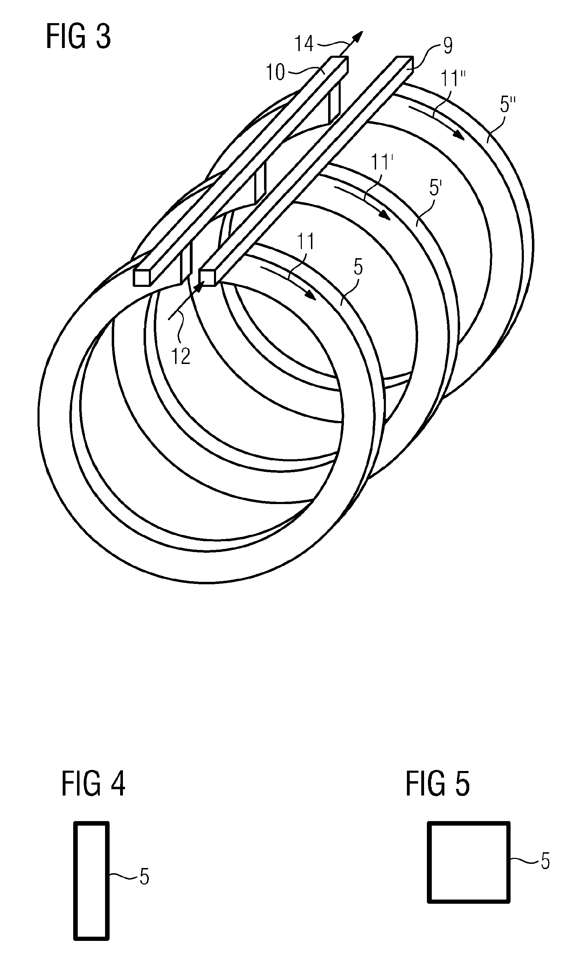

Wie in FIG 4 dargestellt, weisen die Leitungen 5 vorzugsweise einen rechteckförmigen Querschnitt, oder aber wie in FIG 5 dargestellt, vorzugsweise einen quadratischen Querschnitt auf.

Die Leitungen sind dabei ringförmig um die geometrische in axiale Richtung X verlaufende Mittenachse R des Ständers 3 angeordnet. Die Leitungen 5, 5' und 5" weisen im Ausführungsbeispiel die Form eines Rings auf, wobei sie selbstverständlich auch eine andere Form aufweisen können.

In FIG 2 sind die Zuleitungen zu den Leitungen 5, 5' und 5" der Übersichtlichkeit halber nicht dargestellt.

In FIG 3 sind die erfindungsgemäßen Leitungen 5, 5' und 5" perspektivisch dargestellt, wobei der Übersichtlichkeit halber die Bleche nicht dargestellt sind. Die jeweiligen Enden der Leitungen sind mit jeweilig zugehörigen Sammelleitungen 9 und 10 verbunden. Die Flüssigkeit fließt dabei in Richtung des Pfeils 12 in die Sammelleitung 9 hinein und in Richtung der Pfeile 11, 11' und 11" durch die Leitungen 5, 5' und 5" hindurch und dann durch die Sammelleitung 10 hindurch in Richtung des Pfeils 14 ab.

Es sei an dieser Stelle noch einmal ausdrücklich erwähnt, dass bei der Erfindung ein flächiger wärmeleitender Kontakt mit mindestens einem den an die jeweilige Leitung unmittelbar angrenzenden Blechen hergestellt wird. Hierdurch wird eine hohe Wärmeableitung durch das durch die Leitungen 5, 5', 5" und die Sammelleitungen 9, 10 gebildete Kühlsystem erreicht.

## Patentansprüche

1. Ständer für eine elektrische Maschine (1), wobei der Ständer (3) in einer axialen Richtung (X) hintereinander angeordnete Bleche (2,2',2") aufweist, wobei die Bleche (2,2',2") elektrisch voneinander isoliert angeordnet sind, wobei zwischen einigen der Bleche (2, 2',2") eine senkrecht zur axialen Richtung (X) verlaufende, von einer Flüssigkeit durchfließbare Leitung (5,5',5") angeordnet ist.

2. Ständer nach Anspruch 1,
**dadurch gekennzeichnet, dass** die Leitung (5,5',5") ringförmig um die geometrische in axiale Richtung verlaufende Mittenachse (R) des Ständers (3) angeordnet ist.

3. Ständer nach einem der vorherigen Ansprüche,
**dadurch gekennzeichnet, dass** die Leitung (5,5',5") einen quadratischen oder rechteckförmigen Querschnitt aufweist.

4. Elektrische Maschine, wobei die elektrische Maschine einen Ständer nach einem der Ansprüche 1 bis 3 aufweist.

5. Elektrische Maschine nach Anspruch 4,
**dadurch gekennzeichnet, dass** die elektrische Maschine (1) als Generator oder als Elektromotor ausgebildet ist.

6. Elektrische Maschine nach Anspruch 5,
**dadurch gekennzeichnet, dass** der Generator als Windkraftgenerator ausgebildet ist.
